# EUROPEAN PATENT APPLICATION

(11) **EP 4 053 322 A1**
(43) Date of publication of application: **07.09.2022**
(21) Application number: 20881648.8
(22) Date of filing: 29.05.2020
(51) Int. Cl.: D06F 34/20, D06F 34/18, D06F 34/16, D06F 34/28, D06F 37/30, H04N 7/18, G06N 3/08

(54) **INTELLIGENT WASHING MACHINE**

(30) Priority: 01.11.2019 KR 20190138525
(71) Applicant: LG Electronics Inc., SEOUL 07336 (KR)
(72) Inventor: YUN, Jinsik, Seoul 06772 (KR); LEE, Byoungjoo, Seoul 06772 (KR)
(74) Representative: Katérle, Axel
(86) International application number: PCT/KR2020/007003
(87) International publication number: WO 2021/085778

(57) **Abstract**

Disclosed is an intelligent washing machine. A control method for an intelligent washing machine according to an embodiment of the present invention may: predict a washing machine cycle from user information; control the washing machine according to the predicted washing machine cycle; acquire an image of the inside of the drum by means of a camera while the washing machine is being controlled; predict the contamination level inside the drum by using the acquired image; and perform an additional control operation according to the predicted result. The intelligent washing machine may be linked to an Artificial Intelligence module, an Unmanned Aerial Vehicle (UAV), a robot, an Augmented Reality (AR) device, a virtual reality (VR) device, a device related to a 5G service, or the like.

## Description

### [Technical Field]

The present disclosure relates to an intelligent washing machine.

### [Background Art]

An artificial intelligence (AI) system is a computer system implementing human level intelligence and is a system in which a machine learns and determines by itself, unlike existing rule-based smart systems. The more the AI system is used, the higher a recognition rate of the AI system is. Further, the AI system can more accurately understand preference of users. Thus, the existing rule-based smart systems are being gradually replaced by deep learning-based AI systems.

An AI technology consists of machine learning (deep learning) and element techniques using the machine learning.

The machine learning is an algorithm technique that may classifies/learns features of input data by itself. The element technique is a technique for mimicking the human brain's perception and decision capabilities using a machine learning algorithm such as deep learning, and consists of technical fields such as linguistic understanding, visual understanding, inference/prediction, knowledge representation, and motion control.

In this busy modern society, people spend about three hours a day doing housework. In order to reduce time spent on housework and increase rest time, a need for an AI-based intelligent washing machine that decides and controls by itself is emerging.

### [Disclosure]

### [Technical Problem]

An object of the present disclosure is to address the above-described and other needs and/or problems.

Another object of the present disclosure is to implement an intelligent washing machine that determines and/or sets an optimal washing course by itself according to a user.

Another object of the present disclosure is to implement an intelligent washing machine that analyzes a washing state and performs an additional control operation.

Another object of the present disclosure is to implement an intelligent washing machine detecting an article that is not suitable for the purpose of the washing machine.

Another object of the present disclosure is to implement an intelligent washing machine that detects laundry tangle and controls RPM of a motor depending on a result of detection.

### [Technical Solution]

In one aspect of the present disclosure, there is provided a method of controlling an intelligent washing machine, the method comprising identifying a user from an image of the user; predicting a first washing course corresponding to user information based on the identified user information; performing a control operation based on the predicted first washing course; collecting an image inside a drum through a camera while the control operation is being performed; predicting a contamination level inside the drum based on the image inside the drum and a pre-learned prediction model; and changing the first washing course to a second washing course based on the predicted contamination level.

Predicting the first washing course may comprise applying the user information to a pre-learned artificial neural network-based course recommendation model; and determining the washing course based on an output value of the course recommendation model.

Predicting the first washing course may comprise collecting an image inside the drum through the camera in response to a closing of a door; identifying a type of fabric based on the image inside the drum; and applying the identified type of fabric and the user information to a pre-learned artificial neural network-based course recommendation model to determine the first washing course.

Identification information of the user may be stored in a form of an ID.

The first and second washing courses may include at least one of a washing stroke, a rinsing stroke, or a spin-drying stroke. A stroke included in the second washing course may be compared to and different from a stroke of the first washing course in at least one of an operation sequence, an operation pattern, an operation time or RPM.

The method may further comprise collecting a noise generated by rotating a tub through a microphone; detecting an amount of unbalance from a change amount of rate per minute (RPM); and detecting a laundry tangle based on the amount of unbalance and a level of the noise.

The method may further comprise, based on the laundry tangle being sensed, sending a message about the laundry tangle to a user equipment.

The method may further comprise, based on the laundry tangle being sensed, controlling the RPM of the tub to be less than or equal to a laundry attaching speed in the control operation.

The method may further comprise, based on the laundry tangle being sensed, controlling the RPM of the tub at a constant speed greater than or equal to a laundry attaching speed in the control operation.

The method may further comprise, based on the control operation being finished, collecting an image of a gasket; searching a usage history of the user; and determining when to clean the drum based on the image of the gasket and the usage history.

The usage history may include at least one of user information, a type of fabric, a washing time, a washing frequency, a number of times cleaning a tub, a cleaning frequency of the tub, or an additional user course setting in the control operation.

The method may further comprise analyzing the image inside the drum and detecting a cautionary item that is not suitable for use of the washing machine among one or more items included in the image inside the drum; and based on the cautionary item being detected, sending a warning message to a user equipment.

The method may further comprise reinforcement-learning the prediction model based on information of the changed washing course.

In another aspect of the present disclosure, there is provided an intelligent washing machine comprising a communication module; a memory; a camera configured to capture an image including a user and an image inside a drum; and a processor configured to identify the user from the image including the user; predict a first washing course corresponding to user information based on the identified user information; collect the image inside the drum through the camera while performing a control operation based on the predicted first washing course; predict a contamination level inside the drum based on the image inside the drum and a pre-learned prediction model; and change the first washing course to a second washing course based on the predicted contamination level.

### [Advantageous Effects]

Effects of an intelligent washing machine according to an embodiment of the present disclosure are described as follows.

The present disclosure can determine and/or set an optimal washing course by itself according to a user.

The present disclosure can analyze a washing state and perform an additional control operation.

The present disclosure can detect an article that is not suitable for the purpose of a washing machine.

The present disclosure can detect laundry tangle and control RPM of a motor depending on a result of detection.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [Description of Drawings]

The accompanying drawings, which are included to provide a further understanding of the present disclosure and constitute a part of the detailed description, illustrate embodiments of the present disclosure and serve to explain technical features of the present disclosure together with the description.
FIG. 1 illustrates a block diagram of configuration of a wireless communication system to which methods described in the present disclosure are applicable.
FIG. 2 illustrates an example of a signal transmission/reception method in a wireless communication system.
FIG. 3 illustrates an example of a basic operation of a user equipment (UE) and a 5G network in a 5G communication system.
FIG. 4 is a block diagram of an AI device according to an embodiment of the present disclosure.
FIG. 5 illustrates a block diagram of an electronic device.
FIG. 6 illustrates an appearance of an intelligent washing machine.
FIG. 7 illustrates a camera of an intelligent washing machine applied to an embodiment of the present disclosure.
FIG. 8 is a block diagram illustrating configuration of an intelligent washing machine according to an embodiment of the present disclosure.
FIG. 9 is a flow chart schematically illustrating a control method of an intelligent washing machine according to an embodiment of the present disclosure.
FIG. 10 illustrates step S110 of FIG. 9.
FIG. 11 is a flow chart illustrating a washing course prediction method according to an embodiment of the present disclosure.
FIG. 12 illustrates an implementation example of a washing course prediction method of FIG. 11.
FIG. 13 is a flow chart illustrating a washing course prediction method according to another embodiment of the present disclosure.
FIG. 14 illustrates an implementation example of a washing course prediction method of FIG. 13.
FIG. 15 is a flow chart illustrating a cautionary item detection method according to an embodiment of the present disclosure.
FIG. 16 illustrates an implementation example of a cautionary item detection method of FIG. 15.
FIG. 17 is a flow chart illustrating a control method of a washing machine according to an embodiment of the present disclosure.
FIG. 18 illustrates an implementation example of a contamination level measurement method of FIG. 17.
FIG. 19 is a flow chart illustrating a control method for laundry tangle according to an embodiment of the present disclosure.
FIG. 20 is a flow chart illustrating a method of determining when to clean a drum according to an embodiment of the present disclosure.
FIG. 21 illustrates an implementation example of a method of determining when to clean a drum in FIG. 20.

### [Mode for Invention]

Reference will now be made in detail to embodiments of the present disclosure, examples of which are illustrated in the accompanying drawings. Wherever possible, the same reference numbers will be used throughout the drawings to refer to the same or like parts. In general, a suffix such as "module" and "unit" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure. The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, etc. may be used to describe various components, but the components are not limited by such terms. The terms are used only for the purpose of distinguishing one component from other components.

When any component is described as "being connected" or "being coupled" to other component, this should be understood to mean that another component may exist between them, although any component may be directly connected or coupled to the other component. In contrast, when any component is described as "being directly connected" or "being directly coupled" to other component, this should be understood to mean that no component exists between them.

A singular expression can include a plural expression as long as it does not have an apparently different meaning in context.

In the present disclosure, terms "include" and "have" should be understood to be intended to designate that illustrated features, numbers, steps, operations, components, parts or combinations thereof are present and not to preclude the existence of one or more different features, numbers, steps, operations, components, parts or combinations thereof, or the possibility of the addition thereof.

### A. Example of block diagram of UE and 5G Network

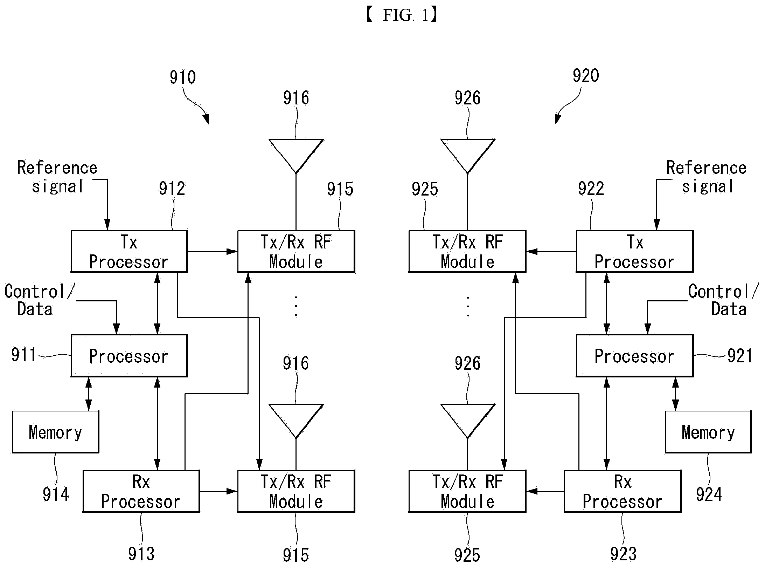

FIG. 1 illustrates a block diagram of configuration of a wireless communication system to which methods described in the present disclosure are applicable.

Referring to FIG. 1, a device (AI device) including an AI module is defined as a first communication device 910 (see FIG. 1), and a processor 911 can perform detailed autonomous operations.

A 5G network including another device (AI server) communicating with the AI device is defined as a second device 920 (see FIG. 1), and a processor 921 can perform detailed AI operations.

The 5G network may be represented as the first communication device and the AI device may be represented as the second communication device.

For example, the first communication device or the second communication device may be a base station (BS), a network node, a transmitter UE, a receiver UE, a wireless device, a wireless communication device, a vehicle, a vehicle with a self-driving function, a connected car, a drone (unmanned aerial vehicle (UAV)), an artificial intelligence (AI) module, a robot, an augmented reality (AR) device, a virtual reality (VR) device, a mixed reality (MR) device, a hologram device, a public safety device, an MTC device, an IoT device, a medical device, a FinTech device (or financial device), a security device, a climate/environment device, a device related to 5G service, or a device related to the fourth industrial revolution field.

For example, a terminal or user equipment (UE) may include a cellular phone, a smartphone, a laptop computer, a digital broadcast terminal, personal digital assistants (PDAs), a portable multimedia player (PMP), a navigation device, a slate PC, a tablet PC, an ultrabook, a wearable device (e.g., a smartwatch, a smart glass and a head mounted display (HMD)), etc. For example, the HMD may be a display device worn on the head of a user. For example, the HMD may be used to realize VR, AR or MR. For example, the drone may be a flight vehicle that flies by a radio control signal without a person being on the flight vehicle. For example, the VR device may include a device that implements an object or a background, etc. of a virtual world. For example, the AR device may include a device implemented by connecting an object or a background of a virtual world to an object or a background, etc. of a real world. For example, the MR device may include a device implemented by merging an object or a background of a virtual world with an object or a background, etc. of a real world. For example, the hologram device may include a device that records and reproduces stereoscopic information to implement a 360-degree stereoscopic image by utilizing a phenomenon of interference of light generated when two laser beams called holography meet. For example, the public safety device may include a video relay device or a video device that can be worn on the user's body. For example, the MTC device and the IoT device may be a device that does not require a person's direct intervention or manipulation. For example, the MTC device and the IoT device may include a smart meter, a vending machine, a thermometer, a smart bulb, a door lock, a variety of sensors, or the like. For example, the medical device may be a device used for the purpose of diagnosing, treating, alleviating, handling or preventing a disease. For example, the medical device may be a device used for the purpose of diagnosing, treating, alleviating or correcting an injury or a disorder. For example, the medical device may be a device used for the purpose of testing, substituting or modifying a structure or a function. For example, the medical device may be a device used for the purpose of controlling pregnancy. For example, the medical device may include a medical device, a surgical device, a (in vitro) diagnostic device, a hearing aid or a device for a surgical procedure, and the like. For example, the security device may be a device installed to prevent a possible danger and to maintain safety. For example, the security device may include a camera, CCTV, a recorder, or a black box, and the like. For example, the FinTech device may be a device capable of providing financial services, such as mobile payment.

Referring to FIG. 1, the first communication device 910 and the second communication device 920 include processors 911 and 921, memories 914 and 924, one or more Tx/Rx radio frequency (RF) modules 915 and 925, Tx processors 912 and 922, Rx processors 913 and 923, and antennas 916 and 926. The Tx/Rx module is also referred to as a transceiver. Each Tx/Rx module 915 transmits a signal via each antenna 926. The processor implements the above-described functions, processes and/or methods. The processor 921 may be related to the memory 924 that stores program code and data. The memory may be referred to as a computer-readable medium. More specifically, the Tx processor 912 implements various signal processing functions with respect to L1 (i.e., physical layer) in DL (communication from the first communication device to the second communication device). The Rx processor implements various signal processing functions of L1 (i.e., physical layer).

UL (communication from the second communication device to the first communication device) is processed in the first communication device 910 in a way similar to that described in association with a receiver function in the second communication device 920. Each Tx/Rx module 925 receives a signal via each antenna 926. Each Tx/Rx module provides RF carriers and information to the Rx processor 923. The processor 921 may be related to the memory 924 that stores program code and data. The memory may be referred to as a computer-readable medium.

### B. Signal Transmission/Reception method in wireless communication system

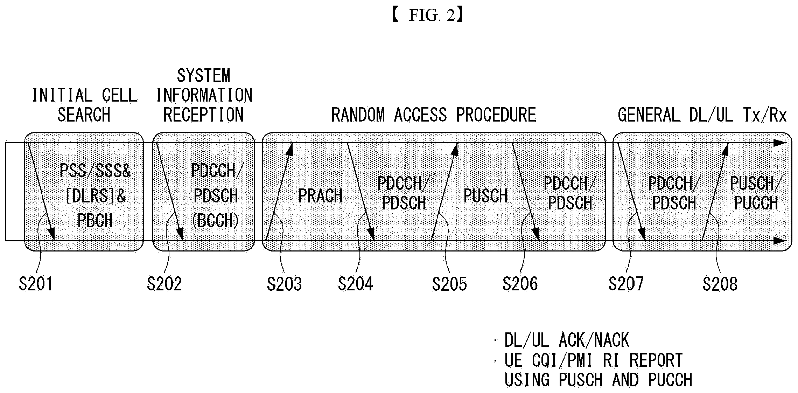

FIG. 2 illustrates an example of a signal transmission/reception method in a wireless communication system.

Referring to FIG. 2, when a UE is powered on or enters a new cell, the UE performs an initial cell search operation such as synchronization with a BS (S201). For this operation, the UE can receive a primary synchronization channel (P-SCH) and a secondary synchronization channel (S-SCH) from the BS to synchronize with the BS and acquire information such as a cell ID. In LTE and NR systems, the P-SCH and S-SCH are respectively called a primary synchronization signal (PSS) and a secondary synchronization signal (SSS). After initial cell search, the UE may acquire broadcast information in the cell by receiving a physical broadcast channel (PBCH) from the BS. Further, the UE may receive a downlink reference signal (DL RS) in the initial cell search step to check a downlink channel state. After initial cell search, the UE may acquire more detailed system information by receiving a physical downlink shared channel (PDSCH) according to a physical downlink control channel (PDCCH) and information included in the PDCCH (S202).

When the UE initially accesses the BS or has no radio resource for signal transmission, the UE may perform a random access procedure (RACH) for the BS (steps S203 to S206). To this end, the UE may transmit a specific sequence as a preamble via a physical random access channel (PRACH) (S203 and S205) and receive a random access response (RAR) message for the preamble via a PDCCH and the corresponding PDSCH (S204 and S206). For a contention-based RACH, a contention resolution procedure may be additionally performed.

After the UE performs the above-described process, the UE can perform PDCCH/PDSCH reception (S207) and physical uplink shared channel (PUSCH)/physical uplink control channel (PUCCH) transmission (S208) as normal uplink/downlink signal transmission processes. In particular, the UE receives downlink control information (DCI) on the PDCCH. The UE monitors a set of PDCCH candidates in monitoring occasions configured to one or more control element sets (CORESETs) on a serving cell according to corresponding search space configurations. The set of PDCCH candidates to be monitored by the UE is defined in terms of search space sets, and the search space set may be a common search space set or a UE-specific search space set. The CORESET consists of a set of (physical) resource blocks with a duration of one to three OFDM symbols. A network may configure the UE to have a plurality of CORESETs. The UE monitors PDCCH candidates in one or more search space sets. Here, the monitoring means attempting to decode PDCCH candidate(s) in a search space. If the UE succeeds in decoding one of the PDCCH candidates in a search space, the UE determines that a PDCCH has been detected from the PDCCH candidates and performs PDSCH reception or PUSCH transmission based on DCI within the detected PDCCH. The PDCCH may be used to schedule DL transmissions on PDSCH and UL transmissions on PUSCH. Here, the DCI on the PDCCH includes downlink assignment (i.e., downlink grant (DL grant)) related to a physical downlink shared channel and including at least a modulation and coding format and resource allocation information, or an uplink grant (UL grant) related to a physical uplink shared channel and including a modulation and coding format and resource allocation information.

An initial access (IA) procedure in a 5G communication system is additionally described with reference to FIG. 2.

The UE can perform cell search, system information acquisition, beam alignment for initial access, and DL measurement based on an SSB. The SSB is interchangeably used with a synchronization signal/physical broadcast channel (SS/PBCH) block.

The SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers.

The cell search refers to a process in which a UE acquires time/frequency synchronization of a cell and detects a cell identifier (ID) (e.g., physical layer cell ID (PCI)) of the cell. The PSS is used to detect a cell ID from a cell ID group, and the SSS is used to detect a cell ID group. The PBCH is used to detect an SSB (time) index and a half-frame.

There are 336 cell ID groups, and there are 3 cell IDs per cell ID group. A total of 1008 cell IDs are present. Information on a cell ID group to which a cell ID of a cell belongs is provided/acquired via an SSS of the cell, and information on the cell ID among 336 cell ID groups is provided/acquired via a PSS.

The SSB is periodically transmitted in accordance with SSB periodicity. A default SSB periodicity assumed by the UE during initial cell search is defined as 20 ms. After cell access, the SSB periodicity may be set to one of {5 ms, 10 ms, 20 ms, 40 ms, 80 ms, 160 ms} by a network (e.g., a BS).

Next, acquisition of system information (SI) is described.

SI is divided into a master information block (MIB) and a plurality of system information blocks (SIBs). SI other than the MIB may be referred to as remaining minimum system information. The MIB includes information/parameter for monitoring a PDCCH that schedules a PDSCH carrying SIB1

(SystemInformationBlock1) and is transmitted by a BS via a PBCH of an SSB. SIB1 includes information related to availability and scheduling (e.g., transmission periodicity and SI-window size) of the remaining SIBs (hereinafter, SIBx, x is an integer equal to or greater than 2). SiBx is included in an SI message and transmitted over a PDSCH. Each SI message is transmitted within a periodically generated time window (i.e., SI-window).

A random access (RA) procedure in the 5G communication system is additionally described with reference to FIG. 2.

A random access procedure is used for various purposes. For example, the random access procedure can be used for network initial access, handover, and UE-triggered UL data transmission. The UE can acquire UL synchronization and UL transmission resources through the random access procedure. The random access procedure is classified into a contention-based random access procedure and a contention-free random access procedure. A detailed procedure for the contention-based random access procedure is as follows.

The UE can transmit a random access preamble via PRACH as Msg1 of a random access procedure in UL. Random access preamble sequences with two different lengths are supported. Long sequence length 839 is applied to subcarrier spacings of 1.25 kHz and 5 kHz, and short sequence length 139 is applied to subcarrier spacings of 15 kHz, 30 kHz, 60 kHz and 120 kHz.

When a BS receives the random access preamble from the UE, the BS sends a random access response (RAR) message (Msg2) to the UE. A PDCCH that schedules a PDSCH carrying a RAR is CRC masked by a random access (RA) radio network temporary identifier (RNTI) (RA-RNTI) and transmitted. Upon detection of the PDCCH masked by the RA-RNTI, the UE can receive a RAR from the PDSCH scheduled by DCI carried by the PDCCH. The UE checks whether the RAR includes random access response information with respect to the preamble transmitted by the UE, i.e., Msg1. Presence or absence of random access information with respect to Msg1 transmitted by the UE can be determined depending on presence or absence of a random access preamble ID with respect to the preamble transmitted by the UE. If there is no response to Msg1, the UE can retransmit the RACH preamble less than a predetermined number of times while performing power ramping. The UE calculates PRACH transmission power for preamble retransmission based on most recent path loss and a power ramping counter.

The UE can perform UL transmission as Msg3 of the random access procedure on a physical uplink shared channel based on the random access response information. The Msg3 may include an RRC connection request and a UE ID. The network may transmit Msg4 as a response to Msg3, and Msg4 can be handled as a contention resolution message on DL. The UE can enter an RRC connected state by receiving Msg4.

### C. Beam Management (BM) procedure of 5G communication System

A BM procedure may be divided into (1) a DL BM procedure using an SSB or a CSI-RS and (2) a UL BM procedure using a sounding reference signal (SRS). In addition, each BM procedure may include Tx beam swiping for determining a Tx beam and Rx beam swiping for determining an Rx beam.

The DL BM procedure using an SSB is described.

Configuration for a beam report using an SSB is performed upon configuration of channel state information (CSI)/beam in RRC_CONNECTED.
- A UE receives, from a BS, a CSI-ResourceConfig IE including CSI-SSB-ResourceSetList for SSB resources used for BM. The RRC parameter "csi-SSB-ResourceSetList" represents a list of SSB resources used for beam management and report in one resource set. An SSB resource set may be configured as {SSBx1, SSBx2, SSBx3, SSBx4, ...}. An SSB index may be defined in the range of 0 to 63.
- The UE receives, from the BS, signals on SSB resources based on CSI-SSB-ResourceSetList.
- When CSI-RS reportConfig related to a report for SSBRI and reference signal received power (RSRP) is configured, the UE reports the best SSBRI and RSRP corresponding to this to the BS. For example, when reportQuantity of the CSI-RS reportConfig IE is configured to 'ssb-Index-RSRP', the UE reports the best SSBRI and RSRP corresponding to this to the BS.

When CSI-RS resource is configured to the same OFDM symbol(s) as SSB and 'QCL-TypeD' is applicable, the UE may assume that the CSI-RS and the SSB are quasi co-located (QCL) from the viewpoint of 'QCL-TypeD'. Here, 'QCL-TypeD' may mean that antenna ports are quasi co-located from the viewpoint of a spatial Rx parameter. When the UE receives signals of a plurality of DL antenna ports with a QCL-TypeD relationship, the same Rx beam can be applied.

Next, a DL BM procedure using a CSI-RS is described.

An Rx beam determination (or refinement) procedure of the UE and a Tx beam swiping procedure of the BS using a CSI-RS are sequentially described. A repetition parameter is set to 'ON' in the Rx beam determination procedure of the UE, and is set to 'OFF' in the Tx beam swiping procedure of the BS.

First, the Rx beam determination procedure of the UE is described.
- The UE receives, from the BS, an NZP CSI-RS resource set IE including an RRC parameter for 'repetition' via RRC signaling. The RRC parameter 'repetition' is set to 'ON'.
- The UE repeatedly receives signals on resource(s) in a CSI-RS resource set, in which the RRC parameter 'repetition' is set to 'ON', in different OFDM symbols through the same Tx beam (or DL spatial domain transmission filter) of the BS.
- The UE determines its RX beam.
- The UE skips a CSI report. That is, the UE may skip a CSI report when the RRC parameter 'repetition' is set to 'ON'.

Next, the Tx beam determination procedure of the BS is described.
- The UE receives, from the BS, an NZP CSI-RS resource set IE including an RRC parameter for 'repetition' via RRC signaling. The RRC parameter 'repetition' is set to 'OFF' and is related to the Tx beam swiping procedure of the BS.
- The UE receives signals on resources in a CSI-RS resource set, in which the RRC parameter 'repetition' is set to 'OFF', in different Tx beams (DL spatial domain transmission filter) of the BS.
- The UE selects (or determines) a best beam.
- The UE reports an ID (e.g., CRI) of the selected beam and related quality information (e.g., RSRP) to the BS. That is, when a CSI-RS is transmitted for the BM, the UE reports a CRI and RSRP with respect thereto to the BS.

Next, the UL BM procedure using an SRS is described.
- The UE receives, from the BS, RRC signaling (e.g., SRS-Config IE) including a (RRC parameter) purpose parameter configured to 'beam management". The SRS-Config IE is used to configure SRS transmission. The SRS-Config IE includes a list of SRS-Resources and a list of SRS-ResourceSets. Each SRS resource set refers to a set of SRS-resources.

The UE determines Tx beamforming for SRS resources to be transmitted based on SRS-SpatialRelation Info included in the SRS-Config IE. SRS-SpatialRelation Info is configured per SRS resource and represents whether the same beamforming as beamforming used for an SSB, a CSI-RS or an SRS is applied per each SRS resource.
- When SRS-SpatialRelationInfo is configured for SRS resources, the same beamforming as beamforming used for the SSB, CSI-RS or SRS is applied and transmitted. However, when SRS-SpatialRelationInfo is not configured for SRS resources, the UE randomly determines Tx beamforming and transmits an SRS through the determined Tx beamforming.

Next, a beam failure recovery (BFR) procedure is described.

In a beamformed system, radio link failure (RLF) may frequently occur due to rotation, movement or beamforming blockage of the UE. Thus, BFR is supported in NR to prevent frequent occurrence of RLF. The BFR is similar to a radio link failure recovery procedure and may be supported when the UE knows new candidate beam(s). For beam failure detection, the BS configures beam failure detection reference signals to the UE, and the UE declares beam failure when the number of beam failure indications from the physical layer of the UE reaches a threshold configured via RRC signaling within a period configured via RRC signaling of the BS. After the beam failure detection, the UE triggers beam failure recovery by initiating a random access procedure on PCell and performs the beam failure recovery by selecting a suitable beam (when the BS provides dedicated random access resources for certain beams, these are prioritized by the UE). The completion of the random access procedure is regarded as completion of beam failure recovery.

### D. Ultra-Reliable and Low Latency Communication (URLLC)

URLLC transmission defined in NR may refer to (1) a relatively low traffic size, (2) a relatively low arrival rate, (3) extremely low latency requirements (e.g., 0.5 ms and 1 ms), (4) relatively short transmission duration (e.g., 2 OFDM symbols), (5) urgent services/messages, etc. In UL, transmission of traffic of a specific type (e.g., URLLC) needs to be multiplexed with another transmission (e.g., eMBB) scheduled in advance in order to satisfy more stringent latency requirements. In this regard, a method is provided, which provides information indicating preemption of specific resources to the pre-scheduled UE and allows a URLLC UE to use the corresponding resources for UL transmission.

NR supports dynamic resource sharing between eMBB and URLLC. eMBB and URLLC services may be scheduled on non-overlapping time/frequency resources, and URLLC transmission may occur in resources scheduled for ongoing eMBB traffic. An eMBB UE may not ascertain whether PDSCH transmission of the corresponding UE has been partially punctured, and the UE may not decode a PDSCH due to corrupted coded bits. In view of this, NR provides a preemption indication. The preemption indication may also be referred to as an interrupted transmission indication.

With regard to the preemption indication, the UE receives DownlinkPreemption IE via RRC signaling from the BS. When the UE is provided with DownlinkPreemption IE, the UE is configured with INT-RNTI provided by a parameter int-RNTI in DownlinkPreemption IE for monitoring of a PDCCH that conveys DCI format 2_1. The UE is additionally configured with a corresponding set of locations for fields in DCI format 2_1 according to a set of serving cells and positionInDCI by INT-ConfigurationPerServing Cell including a set of serving cell indexes provided by servingCellID, is configured with an information payload size for DCI format 2_1 by dci-Payloadsize, and is configured with indication granularity of time-frequency resources by timeFrequencySect.

The UE receives, from the BS, DCI format 2_1 based on the DownlinkPreemption IE.

If the UE detects DCI format 2_1 for a serving cell in a configured set of serving cells, the UE may assume that there is no transmission to the UE in PRBs and symbols indicated by the DCI format 2_1 in a set of PRBs and a set of symbols in a last monitoring period before a monitoring period to which the DCI format 2_1 belongs. For example, the UE assumes that a signal in time-frequency resources indicated by preemption is not DL transmission scheduled to the UE, and decodes data based on signals received in the remaining resource region.

### E. massive MTC (mMTC)

Massive machine type communication (mMTC) is one of 5G scenarios for supporting a hyper-connection service that simultaneously communicate with a large number of UEs. In this environment, a UE intermittently performs communication with a very low speed and mobility. Thus, a main goal of mMTC is operating the UE for a long time at a low cost. In regard to mMTC technology, 3GPP deals with MTC and narrowband (NB)-IoT.

The mMTC technology has features such as repetitive transmission, frequency hopping, retuning, and a guard period of a PDCCH, a PUCCH, a physical downlink shared channel (PDSCH), a PUSCH, etc.

That is, PUSCH (or PUCCH (particularly, long PUCCH) or a PRACH) including specific information and PDSCH (or PDCCH) including a response to the specific information are repeatedly transmitted. The repetitive transmission is performed through frequency hopping. For the repetitive transmission, (RF) retuning from a first frequency resource to a second frequency resource is performed in the guard period, and the specific information and the response to the specific information may be transmitted/received through a narrowband (e.g., 6 resource blocks (RBs) or 1 RB).

### F. AI basic operation using 5G communication

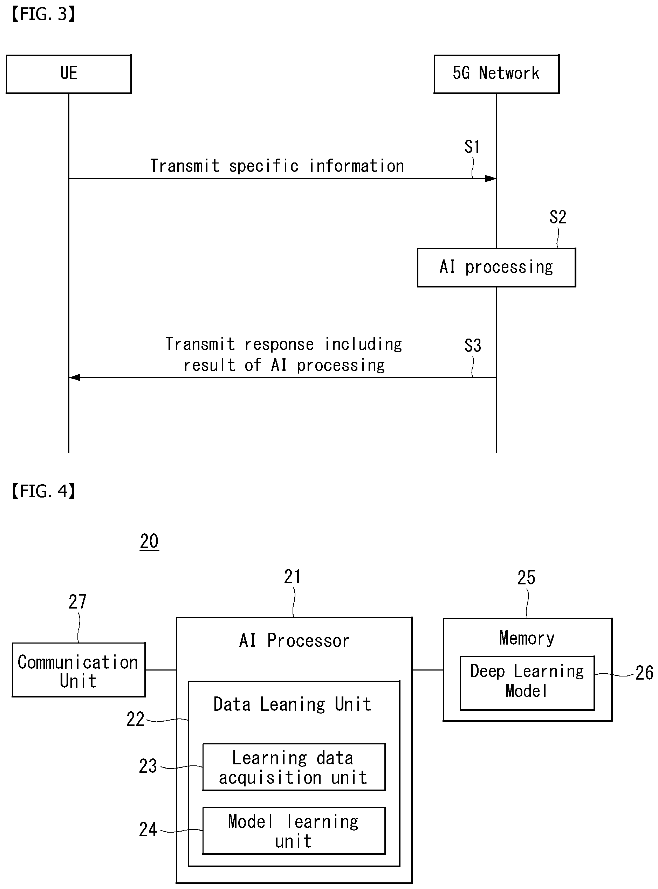

FIG. 3 illustrates an example of a basic operation of a user equipment (UE) and a 5G network in a 5G communication system.

The UE transmits specific information to the 5G network, in S1. The 5G network performs 5G processing on the specific information, S2. The 5G processing may include AI processing. The 5G network sends a response including a result of AI processing to the UE, in S3.

### G. Applied operation between UE and 5G Network in 5G communication system

An AI operation using 5G communication is described in more detail below with reference to FIGS. 1 and 2 and the wireless communication technology (BM procedure, URLLC, mMTC, etc.) described above.

First, a basic procedure of an applied operation, to which a method according to the present disclosure to be described later and eMBB of 5G communication are applied, is described.

As in steps S1 and S3 of FIG. 3, the UE performs an initial access procedure and a random access procedure with the 5G network prior to step S1 of FIG. 3, in order to transmit/receive signals, information, etc. to/from the 5G network.

More specifically, the UE performs an initial access procedure with the 5G network based on SSB, in order to acquire DL synchronization and system information. A beam management (BM) procedure and a beam failure recovery procedure may be added to the initial access procedure, and a quasi-co-location (QCL) relationship may be added in a process in which the UE receives a signal from the 5G network.

In addition, the UE performs a random access procedure with the 5G network for UL synchronization acquisition and/or UL transmission. The 5G network may transmit, to the UE, a UL grant for scheduling transmission of specific information. Thus, the UE transmits the specific information to the 5G network based on the UL grant. In addition, the 5G network transmits, to the UE, a DL grant for scheduling transmission of a result of 5G processing for the specific information. Thus, the 5G network may transmit, to the UE, a response including a result of AI processing based on the DL grant.

Next, a basic procedure of an applied operation, to which a method according to the present disclosure to be described later and URLLC of 5G communication are applied, is described.

As described above, after the UE performs the initial access procedure and/or the random access procedure with the 5G network, the UE may receive DownlinkPreemption IE from the 5G network. Then, the UE receives, from the 5G network, DCI format 2_1 including a preemption indication based on DownlinkPreemption IE. The UE does not perform (or expect or assume) reception of eMBB data in resources (PRBs and/or OFDM symbols) indicated by the preemption indication. Thereafter, when the UE needs to transmit specific information, the UE may receive a UL grant from the 5G network.

Next, a basic procedure of an applied operation, to which a method according to the present disclosure to be described later and mMTC of 5G communication are applied, is described.

Description will focus on parts in the steps of FIG. 3 which are changed according to application of mMTC.

In step S1 of FIG. 3, the UE receives a UL grant from the 5G network in order to transmit specific information to the 5G network. The UL grant may include information on the number of repetitions of transmission of the specific information, and the specific information may be repeatedly transmitted based on the information on the number of repetitions. That is, the UE transmits the specific information to the 5G network based on the UL grant. The repetitive transmission of the specific information may be performed through frequency hopping, the first transmission of the specific information may be performed in a first frequency resource, and the second transmission of the specific information may be performed in a second frequency resource. The specific information may be transmitted on a narrowband of 6 resource blocks (RBs) or 1 RB.

The 5G communication technology described above may be applied in combination with the methods according to the present disclosure to be described later, or may be supplemented to specify or clarify the technical features of methods described in the present disclosure.

### Block diagram of AI device

FIG. 4 is a block diagram of an AI device according to an embodiment of the present disclosure.

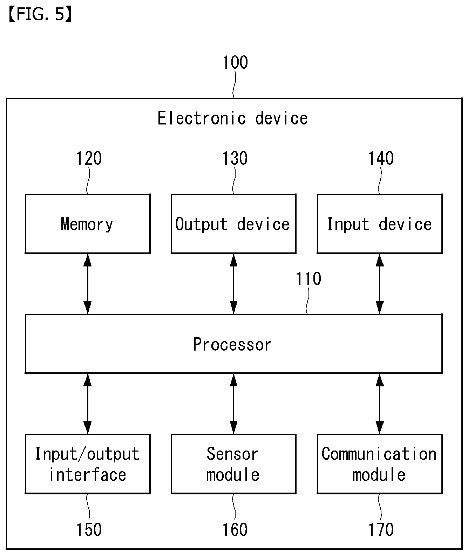

An AI device 20 may include an electronic device including an AI module capable of performing AI processing, or a server including the AI module, and the like. The AI device 20 may be included as at least a partial configuration of a device 100 illustrated in FIG. 5 to perform at least a part of the AI processing.

The AI processing may include all operations related to the control of the device 100 illustrated in FIG. 5. For example, an autonomous vehicle may perform the AI processing on sensing data or driver data to perform a processing/determination operation and a control signal generation operation. For example, the autonomous vehicle may also perform the autonomous driving control by performing AI processing on data obtained through an interaction with other electronic devices included in the autonomous vehicle.

The AI device 20 may include an AI processor 21, a memory 25, and/or a communication unit 27.

The AI device 20 is a computing device capable of learning a neural network and may be implemented as various electronic devices including a server, a desktop PC, a notebook PC, a tablet PC, and the like.

The AI processor 21 may learn a neural network using a program stored in the memory 25. In particular, the AI processor 21 may learn a neural network for recognizing device related data. The neural network for recognizing the device related data may be designed to emulate a human brain structure on a computer and may include a plurality of network nodes with weights that emulate neurons in a human neural network. The plurality of network nodes may send and receive data according to each connection relationship so that neurons emulate the synaptic activity of neurons sending and receiving signals through synapses. Herein, the neural network may include a deep learning model which has evolved from a neural network model. In the deep learning model, a plurality of network nodes may be arranged in different layers and may send and receive data according to a convolution connection relationship. Examples of the neural network model may include various deep learning techniques, such as deep neural networks (DNN), convolutional deep neural networks (CNN), recurrent Boltzmann machine (RNN), restricted Boltzmann machine (RBM), deep belief networks (DBN), and deep Q-networks, and are applicable to fields including computer vision, voice recognition, natural language processing, and voice/signal processing, etc.

A processor performing the above-described functions may be a general purpose processor (e.g., CPU), but may be AI-dedicated processor (e.g., GPU) for AI learning.

The memory 25 may store various programs and data required for the operation of the AI device 20. The memory 25 may be implemented as a non-volatile memory, a volatile memory, a flash memory, a hard disk drive (HDD), or a solid state drive (SSD), etc. The memory 25 may be accessed by the AI processor 21, and the AI processor 21 may read/write/modify/delete/update data. Further, the memory 25 may store a neural network model (e.g., deep learning model 26) created by a learning algorithm for data classification/recognition according to an embodiment of the present disclosure.

The AI processor 21 may further include a data learning unit 22 for learning a neural network for data classification/recognition. The data learning unit 22 may learn criteria as to which learning data is used to determine the data classification/recognition and how to classify and recognize data using learning data. The data learning unit 22 may learn a deep learning model by acquiring learning data to be used in the learning and applying the acquired learning data to the deep learning model.

The data learning unit 22 may be manufactured in the form of at least one hardware chip and mounted on the AI device 20. For example, the data learning unit 22 may be manufactured in the form of a dedicated hardware chip for artificial intelligence (AI), or may be manufactured as a part of a general purpose processor (e.g., CPU) or a graphic-dedicated processor (e.g., GPU) and mounted on the AI device 20. Further, the data learning unit 22 may be implemented as a software module. If the data learning unit 22 is implemented as the software module (or a program module including instruction), the software module may be stored in non-transitory computer readable media. In this case, at least one software module may be provided by an operating system (OS), or provided by an application.

The data learning unit 22 may include a learning data acquisition unit 23 and a model learning unit 24.

The learning data acquisition unit 23 may acquire learning data required for a neural network model for classifying and recognizing data. For example, the learning data acquisition unit 23 may acquire, as learning data, data and/or sample data of the vehicle to be input to a neural network model.

By using the acquired learning data, the model learning unit 24 may learn so that the neural network model has a criteria for determining how to classify predetermined data. In this instance, the model learning unit 24 may train the neural network model through supervised learning which uses at least a part of the learning data as the criteria for determination. Alternatively, the model learning unit 24 may train the neural network model through unsupervised learning which finds criteria for determination by allowing the neural network model to learn on its own using the learning data without supervision. Further, the model learning unit 24 may train the neural network model through reinforcement learning using feedback about whether a right decision is made on a situation by learning. Further, the model learning unit 24 may train the neural network model using a learning algorithm including error back-propagation or gradient descent.

If the neural network model is trained, the model learning unit 24 may store the trained neural network model in the memory. The model learning unit 24 may store the trained neural network model in a memory of a server connected to the AI device 20 over a wired or wireless network.

The data learning unit 22 may further include a learning data pre-processing unit (not shown) and a learning data selection unit (not shown), in order to improve a result of analysis of a recognition model or save resources or time required to create the recognition model.

The learning data pre-processing unit may pre-process acquired data so that the acquired data can be used in learning for determining the situation. For example, the learning data pre-processing unit may process acquired learning data into a predetermined format so that the model learning unit 24 can use the acquired learning data in learning for recognizing images.

Moreover, the learning data selection unit may select data required for learning among learning data acquired by the learning data acquisition unit 23 or learning data pre-processed by the pre-processing unit. The selected learning data may be provided to the model learning unit 24. For example, the learning data selection unit may detect a specific area in an image obtained by a camera of the vehicle to select only data for objects included in the specific area as learning data.

In addition, the data learning unit 22 may further include a model evaluation unit (not shown) for improving the result of analysis of the neural network model.

The model evaluation unit may input evaluation data to the neural network model and may allow the model learning unit 22 to learn the neural network model again if a result of analysis output from the evaluation data does not satisfy a predetermined criterion. In this case, the evaluation data may be data that is predefined for evaluating the recognition model. For example, if the number or a proportion of evaluation data with inaccurate analysis result among analysis results of the recognition model learned on the evaluation data exceeds a predetermined threshold, the model evaluation unit may evaluate the analysis result as not satisfying the predetermined criterion.

The communication unit 27 may send an external electronic device a result of the AI processing by the AI processor 21.

Although the AI device 20 illustrated in FIG. 4 is described to be functionally separated into the AI processor 21, the memory 25, the communication unit 27, etc., the above components may be integrated into one module and referred to as an AI module.

FIG. 5 illustrates a block diagram of an electronic device.

Referring to FIG. 5, an electronic device 100 may include at least one processor 110, a memory 120, an output device 130, an input device 140, an input/output interface 150, a sensor module 160, and a communication module 170.

The processor 110 may include at least one application processor (AP), at least one communication processor (CP), or at least one artificial intelligence (AI) processor. The application processor, the communication processor, or the AI processor may be respectively included in different integrated circuit (IC) packages, or may be included in one IC package.

The application processor may control a plurality of hardware or software components connected to the application processor by running an operating system or an application program, and perform various data processing/operation including multimedia data. For example, the application processor may be implemented as a system on chip (SoC). The processor 110 may further include a graphic processing unit (GPU) (not shown).

The communication processor may perform functions of managing a data link and converting a communication protocol in communication between the electronic device 100 and other electronic devices connected via a network. For example, the communication processor may be implemented as the SoC. The communication processor may perform at least a portion of a multimedia control function.

In addition, the communication processor may control data transmission and reception of the communication module 170. The communication processor may be implemented to be included as at least a part of the application processor.

The application processor or the communication processor may load, on a volatile memory, and process a command or data that is received from at least one of a non-volatile memory or other components connected to each of the application processor and the communication processor. Further, the application processor or the communication processor may store data, that is received from at least one of other components or generated by at least one of the other components, in the non-volatile memory.

The memory 120 may include an internal memory or an external memory. The internal memory may include at least one of a volatile memory (e.g., dynamic RAM (DRAM), static RAM (SRAM), synchronous dynamic RAM (SDRAM), etc.) or a non-volatile memory (e.g., one time programmable ROM (OTPROM), programmable ROM (PROM), erasable and programmable ROM (EPROM), electrically erasable and programmable ROM (EEPROM), mask ROM, flash ROM, NAND flash memory, NOR flash memory, etc.). According to an embodiment, the internal memory may take the form of a solid state drive (SSD). The external memory may include flash drive, for example, compact flash (CF), secure digital (SD), micro secure digital (Micro-SD), mini secure digital (Mini-SD), extreme digital (xD) or a memory stick, etc.

The output device 130 may include at least one of a display module or a speaker. The output device 130 may display various types of data including multimedia data, text data, voice data, etc. to a user or output the data as sound.

The input device 140 may include a touch panel, a digital pen sensor, a key, or an ultrasonic input device, etc. For example, the input device 140 may be the input/output interface 150. The touch panel may recognize a touch input in at least one of capacitive, pressure-sensitive, infrared, or ultrasonic types. In addition, the touch panel may further include a controller (not shown). In case of a capacitive touch panel, not only direct touch but also proximity recognition is possible. The touch panel may further include a tactile layer. In this case, the touch panel may provide a tactile reaction to the user.

The digital pen sensor may be implemented using the same or similar method to receiving a user's touch input or a separate recognition layer. The key may use a keypad or a touch key. The ultrasonic input device is a device that can confirm data by detecting a micro-sonic wave at a user equipment (UE) through a pen generating an ultrasonic signal, and is capable of wireless recognition. The electronic device 100 may also receive a user input from an external device (e.g., network, computer, or server) connected to the communication module 170 using the communication module 170.

The input device 140 may further include a camera module and a microphone. The camera module is a device capable of taking images and videos, and may include one or more image sensors, an image signal processor (ISP), or a flash LED. The microphone may receive a voice signal and convert it into an electrical signal.

The input/output interface 150 may transmit a command or data, that is input from the user through the input device or the output device, to the processor 110, the memory 120, the communication module 170, etc. through a bus (not shown). For example, the input/output interface 150 may provide the processor 110 with data for a user's touch input that is input through the touch panel. For example, the input/output interface 150 may output a command or data, that is received from the processor 110, the memory 120, the communication module 170, etc. through the bus, through the output device 130. For example, the input/output interface 150 may output voice data processed by the processor 110 to the user through the speaker.

The sensor module 160 may include at least one of a gesture sensor, a gyro sensor, an atmospheric pressure sensor, a magnetic sensor, an acceleration sensor, a grip sensor, a proximity sensor, an RGB (red, green, blue) sensor, a biometric sensor, a temperature/humidity sensor, an illuminance sensor, or an ultraviolet (UV) sensor. The sensor module 160 may measure physical quantity or sense an operating state of the electronic device 100 to convert measured or sensed information into electrical signals. Additionally or alternatively, the sensor module 160 may include an E-nose sensor, an electromyography (EMG) sensor, an electroencephalogram (EEG) sensor (not shown), an electrocardiogram (ECG) sensor, a photoplethysmography (PPG) sensor, a heart rate monitor (HRM) sensor, a perspiration sensor, a fingerprint sensor, or the like. The sensor module 160 may further include a control circuit for controlling at least one sensor included therein.

The communication module 170 may include a wireless communication module or an RF module. The wireless communication module may include, for example, Wi-Fi, BT, GPS or NFC. For example, the wireless communication module may provide a wireless communication function using a radio frequency. Additionally or alternatively, the wireless communication module may include a network interface or a modem, etc. for connecting the electronic device 100 to a network (e.g., Internet, LAN, WAN, telecommunication network, cellular network, satellite network, POTS or 5G network, etc.).

The RF module may be responsible for transmitting and receiving data, for example, transmitting and receiving an RF signal or a called electronic signal. For example, the RF module may include a transceiver, a power amp module (PAM), a frequency filter, or a low noise amplifier (LNA), etc. Further, the RF module may further include components, for example, conductors or lead wires, etc. for transmitting and receiving electromagnetic waves in a free space in wireless communication.

The electronic device 100 according to various embodiments of the present disclosure may include at least one of a TV, a refrigerator, an oven, a clothing styler, a robot cleaner, a drone, an air conditioner, an air cleaner, a PC, a speaker, a home CCTV, an electric light, a washing machine, and a smart plug. Since the components of the electronic device 100 illustrated in FIG. 5 are exemplified as components generally provided in an electronic device, the electronic device 100 according to the embodiment of the present disclosure is not limited to the above-described components, and the components may be omitted and/or added, if necessary or desired. The electronic device 100 may perform an artificial intelligence-based control operation by receiving a result of AI processing from the AI device illustrated in FIG. 4, or may perform the AI processing in an on-device manner by including an AI module in which the components of the AI device are integrated into one module.

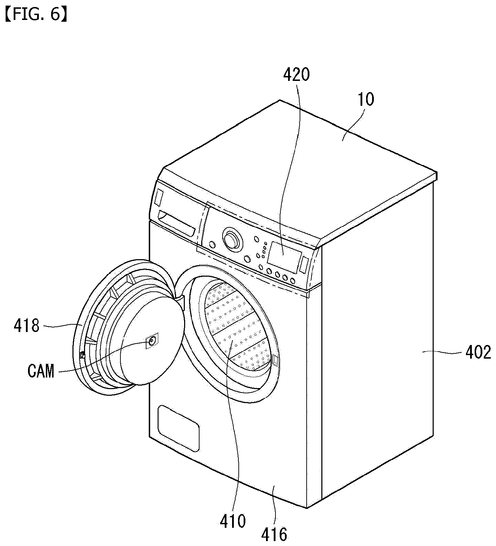

FIG. 6 illustrates an appearance of an intelligent washing machine.

Referring to FIG. 6, an intelligent washing machine 10 on which a control method according to an embodiment of the present disclosure is implemented may include a cabinet 402 forming an appearance, a drum 410 disposed inside a tub (not shown), a motor (not shown) rotating the drum 410, a cabinet cover 416 mounted on a front surface of the cabinet 402, a door 418 coupled to the cabinet cover 416, and a control panel 420 for inputting operating instructions of the intelligent washing machine 10.

The cabinet cover 416 is mounted to the front of the cabinet 402 and includes a laundry entrance formed at the center. The door 418 is movably installed on the cabinet cover 416 and opens and closes the laundry entrance. The control panel 420 includes an input key that is disposed on an upper part of the cabinet cover 416 and displays an operating status of the washing machine and gives the operating instructions of the intelligent washing machine.

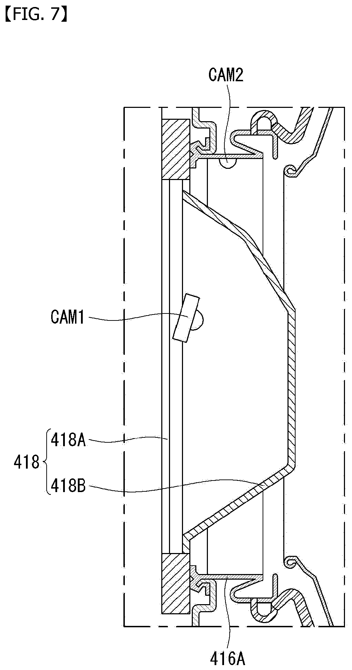

FIG. 7 illustrates a camera of an intelligent washing machine applied to an embodiment of the present disclosure.

In an embodiment of the present disclosure, a camera CAM1 may be disposed in the door 418 of the washing machine 10. The camera CAM1 may be disposed between an outer cover 418A and an inner glass 418B, but is not limited thereto. As an example, since the camera CAM1 is disposed in a space between the outer cover 418A and the inner glass 418B, the present disclosure can efficiently prevent an impact or foreign substances from the outside of the intelligent washing machine 10 and prevent contamination or contact due to wash water or laundry in the drum 410.

At least one camera CAM1 may be provided depending on the functionality and use of the intelligent washing machine 10. For example, the camera CAM1 may be implemented as a stereo camera (or 3D camera) including a plurality of image sensors or implemented as a 2D camera including one image sensor, but is not limited thereto. Such a camera CAM1 for capturing the inside of the drum 410 may be defined as a drum camera CAM1.

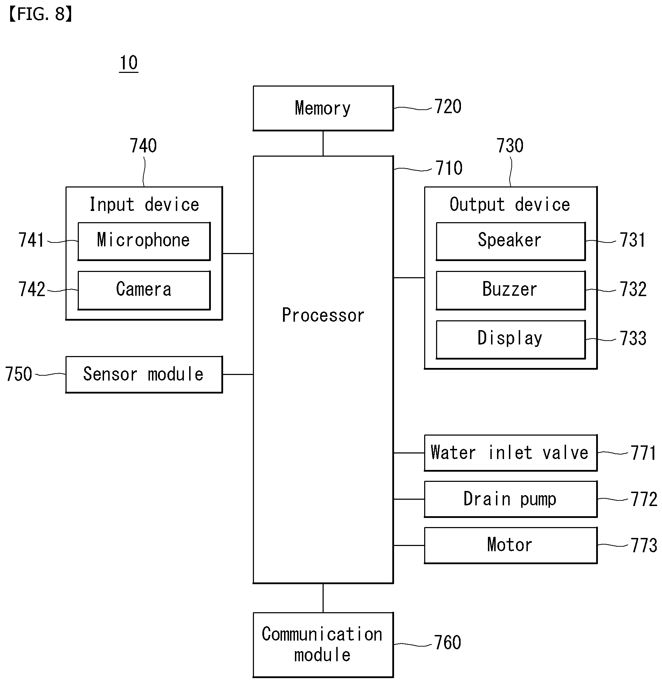

The plurality of cameras CAM1 may be disposed on an inside wall of the outer cover 418A so as to face the inner glass 418B, and may obtain image data including an image of the inner glass 418B under the control of a processor 710 (see FIG. 8). The processor 710 (see FIG. 8) may process and merge door images obtained by the respective cameras CAM1, or select one of the door images and apply it to one of one or more artificial neural network-based learning models.

According to an embodiment of the present disclosure, a gasket 416A may be formed around the perimeter of the laundry entrance to prevent wash water in the drum from spilling out. For example, the gasket 416A may prevent wash water from spilling out between the drum 410 and the cabinet, between the drum 410 and the door 418, and so on. The gasket 416A may be made from rubber, but is not limited thereto.

According to an embodiment of the present disclosure, one of the plurality of cameras may be configured to capture the gasket 416A and obtain image data including an image of the gasket 416A. Since the inner glass 418B is positioned between a camera CAM2 and the gasket 416A in a state in which the door 418 is closed, the processor 710 (see FIG. 8) may control in such a way as to obtain a gasket image in a state in which the door 418 is open. Such a camera CAM2 for capturing an image of the gasket 416A may be defined as a gasket camera CAM2.

FIG. 8 is a block diagram illustrating configuration of an intelligent washing machine according to an embodiment of the present disclosure. The intelligent washing machine 10 of FIG. 8 is described focusing on differences from the components described above with reference to FIG. 5, and redundancies are omitted.

Referring to FIG. 8, the intelligent washing machine 10 may include the processor 710, a memory 720, an output device 730, an input device 740, a sensor module 750, and a communication module 760. The intelligent washing machine 10 may correspond to an example of the AI device described above with reference to FIG. 4.

The output device 730 may include an output means for informing the user of various information related to the operation of the intelligent washing machine 10. For example, the output device 730 may include a speaker or buzzer as an audio output means and include a display as a graphic or text output means. For example, the output device 730 may be disposed on the control panel of FIG. 4, but is not limited thereto.

The input device 740 may include at least one input means inputting a predetermined signal or data to the intelligent washing machine 10 by user manipulation. For example, the input device 740 may include a button, a dial, a touchpad, a microphone, etc. The input device 740 may be disposed on the control panel, but is not limited thereto.

According to an embodiment of the present disclosure, the input device 740 may include one or more cameras CAM1 and CAM2, and the cameras CAM1 and CAM2 may include the door camera CAM1 and the gasket camera CAM2 described above.

The processor 710 may control the overall operation of the intelligent washing machine 10. The processor 710 may perform the control operation including a washing stroke, a rinsing stroke, a spin-drying stroke, or a drying stroke. The processor 710 may perform the control operation according to a preset algorithm and may control the operations of a motor 773, a water inlet valve 771, a drain pump 772, etc. according to each stroke.

In an embodiment of the present disclosure, the processor 710 may identify the user from a user's voice or image and predict a washing course corresponding to user information from identified user information. In addition, the processor 710 may control the intelligent washing machine 10 based on the predicted washing course.

The processor 710 may collect images inside the drum through the camera CAM while the control operation is being performed, and predict a level of contamination inside the drum using a pre-learned prediction model. The processor 710 may control the intelligent washing machine 10 to perform an additional control operation depending on the predicted level of contamination.

The processor 710 may detect laundry tangle based on an amount of unbalance and a level of noise. In this instance, the processor 710 may collect a noise generated while the tub rotates through the microphone, and detect the amount of unbalance from an amount of change in RPM. Based on the collected and detected information as above, the processor 710 may detect the laundry tangle. The processor 710 may perform various control processes depending on whether or not the laundry tangle is detected.

The processor 710 may detect a cautionary item based on the images inside the drum. The cautionary item refers to an item that is not suitable for use of the washing machine.

The processor 710 may reinforce and learn a prediction model based on information of the additional control operation.

A control method of the intelligent washing machine 10 described in the present disclosure is described in detail below.

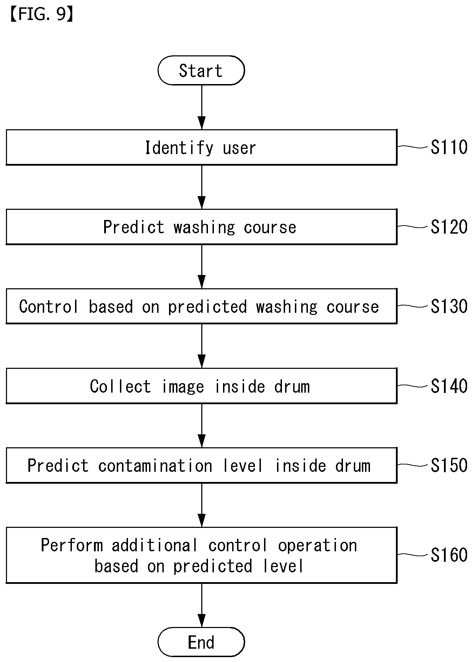

FIG. 9 is a flow chart schematically illustrating a control method of an intelligent washing machine according to an embodiment of the present disclosure.

Referring to FIG. 9, the processor 710 may identify the user from a user's voice or image, in S110.

The intelligent washing machine 10 may receive the user's voice or image through a microphone or a camera. In this instance, the image may be understood to include both a still image and a moving picture.

The processor 710 may set the user's voice or image and identification information labeled on the voice or image as a learning dataset to learn an artificial neural network-based user identification model. The processor 710 may apply the user's voice or image to a pre-learned identification model and identify a user corresponding to the voice or image from an output value of the identification model.

The processor 710 may predict a washing course corresponding to user information from information of the identified user, in S120.

An artificial neural network-based course recommendation model may be used to predict the washing course.

A first course recommendation model according to an embodiment of the present disclosure may be pre-learned by the processor 710 by setting the user information and a washing course labeled on the user information as a learning dataset. The processor 710 may apply the user information identified in S110 to the first course recommendation model and predict the washing course corresponding to the user information from the output value.

In this instance, the user information may be stored in an ID format. For example, the user information may be stored in an ID format corresponding to a specific user, for example, a farther (∘∘∘) of ID#01, a mother (ΔΔΔ) of ID#02, and a daughter (◇◇◇) of ID#03. At least one washing course included in a class of the first course recommendation model may be determined by a usage history of the user. Information of the usage history may include at least one of user information, a type of fabric, a washing time, a washing frequency, or an additional user course setting during a control operation.

A second course recommendation model according to another embodiment of the present disclosure may be pre-learned by the processor 710 by setting user information and a type of fabric as input data and setting a washing course labeled on the input data as a learning dataset. The processor 710 may apply the user information identified in S110 and a type of fabric in the drum identified through a drum camera CAM to the second course recommendation model and may predict a washing course from an output value.

The intelligent washing machine 10 may use one of the first course recommendation model and the second course recommendation model, and may also use the first and second course recommendation models together by operatively combining the first and second course recommendation models.

In various embodiments of the present disclosure, the labeled washing course may be determined based on a usage history of the user. The labeled washing course may be set as a most used washing course by analyzing the usage history of the user.

The processor 710 may collect images inside the drum through the camera CAM while a control operation is being performed, in S130.

The processor 710 may generate an image inside the drum through the camera CAM while the control operation of the washing machine is performed. In this case, the generated image may be defined as a drum image.

The processor 710 may predict a level of contamination inside the drum using a pre-learned prediction model, in S140.

At least one of a regression model, a neural network (NN) or a long short-term memory (LSTM) recurrent neural network may be used to predict the contamination level.

The prediction model may be a learning model trained by setting a feature value extracted from the image inside the drum and a level of contamination labeled in response to the feature value as learning data. The processor 710 may apply the image inside the drum to the prediction model and predict the level of contamination inside the drum based on the output value of the prediction model.

The processor 710 may perform an additional control operation depending on the predicted contamination level, in S150.

In an embodiment of the present disclosure, the processor may change a predicted first washing course to a second washing course based on the user information identified depending on the predicted contamination level. The first and second washing courses may include at least one of a washing stroke, a rinsing stroke, or a spin-drying stroke. At least one stroke included in the second washing course may be compared to and different from at least one stroke of the corresponding first washing course in at least one of an operation sequence, an operation pattern, an operation time or RPM. In various embodiments of the present disclosure, when the predicted contamination level is equal to or greater than a preset threshold, the processor 710 may control to perform an additional rinsing stroke. Further, the processor 710 may set the rinsing stroke so that the number and time of rinsing in the rinsing stroke are increased in proportion to the predicted contamination level.

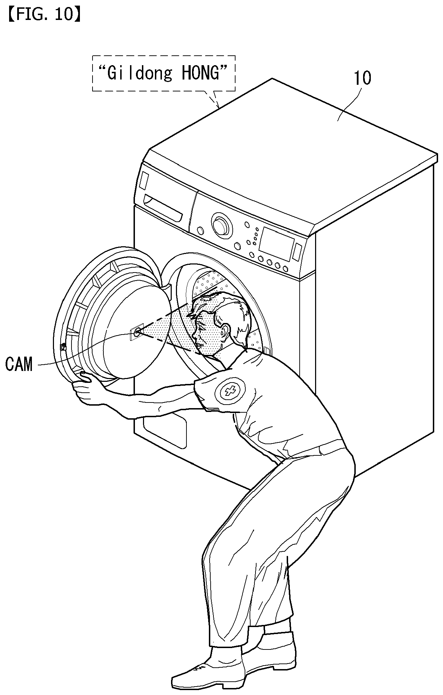

FIG. 10 illustrates the step S110 of FIG. 9.

Referring to FIG. 10, the camera CAM may be disposed on the door 418 of the washing machine. The camera CAM may be disposed between the outer cover and the inner glass, but is not limited thereto.

At least one camera CAM may be provided depending on the functionality and use of the intelligent washing machine 10. For example, the camera CAM may be implemented as a stereo camera (or 3D camera) including a plurality of image sensors or implemented as a 2D camera including one image sensor, but is not limited thereto. Such a camera for capturing the inside of the drum may be defined as a drum camera.

The camera according to an embodiment of the present disclosure may generate an image of the user in response to the opening of the door 418. In particular, the camera CAM may have a wide angle set to capture a face area of the user. The processor 710 may generate a face image of the user through the camera CAM and identify who is currently putting the laundry (or clothes) based on the face image.

In this instance, the generated image may be applied to at least one artificial neural network-based learning model described above with reference to FIG. 8 and may be used to generate various inference results.

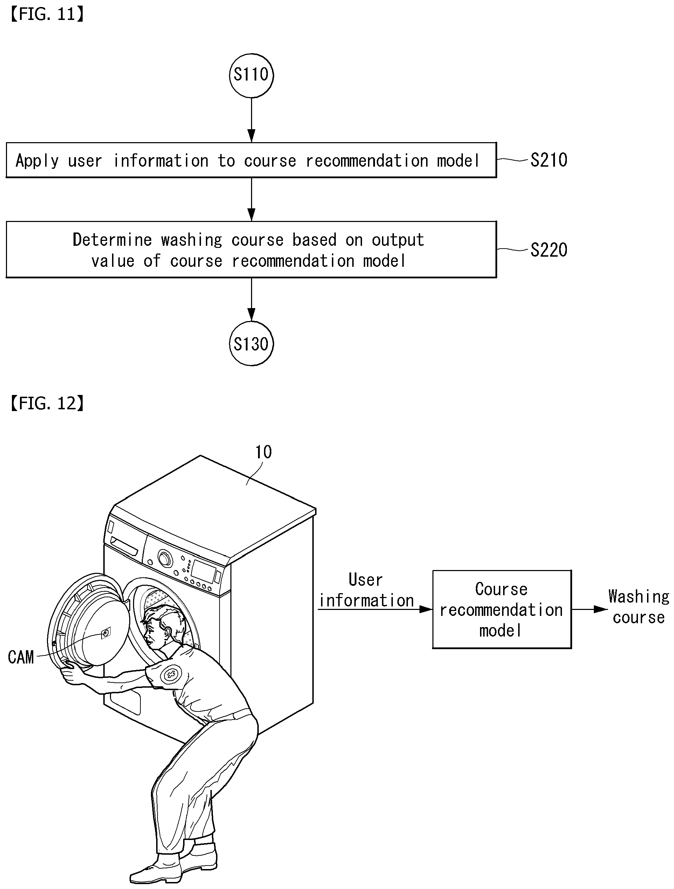

FIG. 11 is a flow chart illustrating a washing course prediction method according to an embodiment of the present disclosure.

Referring to FIG. 11, the processor 710 may identify the user from a user's voice or image and apply identified user information to a course recommendation model, in S210.

As described above, the course recommendation model according to an embodiment of the present disclosure may be pre-learned by the processor 710 by setting the user information and a washing course labeled on the user information as a learning dataset. The processor 710 may apply the user information identified in S110 to the course recommendation model and predict the washing course corresponding to the user information from an output value.

The intelligent washing machine 10 may use one of the first course recommendation model and the second course recommendation model, and may also use the first and second course recommendation models together by operatively combining the first and second course recommendation models.

The processor 710 may determine the washing course based on the output value of the course recommendation model, in S220.

FIG. 12 illustrates an implementation example of a washing course prediction method of FIG. 11.

Referring to FIG. 12, as described above, when an event in which the door 418 of the intelligent washing machine 10 is converted to an open state occurs, the processor 710 may recognize a face of the user through the camera CAM. The processor 710 may inquire the detected user information of the user according to a result of identification. The user information may include an ID of the user.

As described above with reference to FIG. 11, the processor 710 may apply the user information to a course recommendation model. The processor 710 may determine a washing course from an output value of the course recommendation model for the user information.

The processor 710 may control the operation of the washing machine depending on the determined washing course. For example, the processor 710 may identify the user as ID#01 based on the user's face recognition result. When ID#01 is input, the course recommendation model may recommend a washing course in which the washing stroke is performed and then the rinsing stroke is repeated 3 times for 30 minutes.

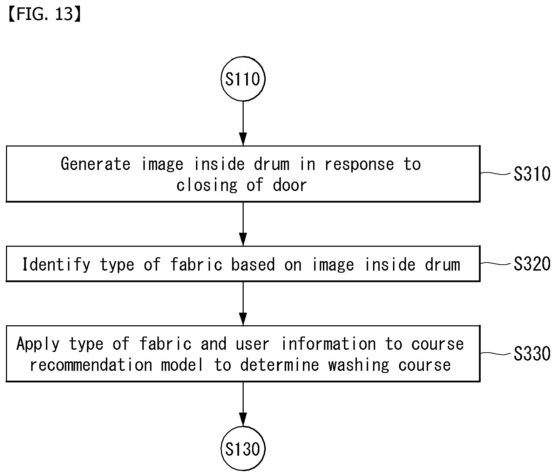

FIG. 13 is a flow chart illustrating a washing course prediction method according to another embodiment of the present disclosure.

Referring to FIG. 13, the processor 710 may generate an image inside the drum through the camera CAM in response to the closing of the door 418, in S310.

The processor 710 may sense the closing of the door 418 through at least one sensor included in the intelligent washing machine 10. For example, an input sensor included in the door 418 may detect a change in a pressure at the moment the door 418 is closed, and generate a signal based on the pressure change. For example, an ultrasonic sensor included in the door 418 may sense the closing of the door 418 based on a change in a reception amount of the ultrasonic signal. For example, an optical sensor included in the door 418 may sense the closing of the door 418 based on a change in an illuminance around the sensor. The sensor sensing the door closing according to the present disclosure is not limited to examples described above.

When the processor 710 senses the closing of the door 418, the processor 710 may control the camera CAM to generate an image inside the drum. As a result, the processor 710 may generate the image inside the drum when the door 418 is closed.

The processor 710 may identify a type of fabric based on the image inside the drum, in S320.

The type of fabric may include silk, fur, cotton, and the like. The processor 710 may extract feature information from the image inside the drum and identify the type of fabric using the extracted feature information. In this instance, the extracted feature information may include at least one of a type, a material, a weight, or an amount of the fabric.

The processor 710 may apply the identified fabric type and user information to a course recommendation model and determine a washing course from an output value of the course recommendation model, in S330.

As described above, the course recommendation model according to another embodiment of the present disclosure may be pre-learned by the processor 710 by setting user information and a type of fabric as input data and setting a washing course labeled on the input data as a learning dataset. The processor 710 may apply the user information identified in S110 and the type of fabric in the drum identified through a drum camera to the course recommendation model and may predict a washing course from the output value.

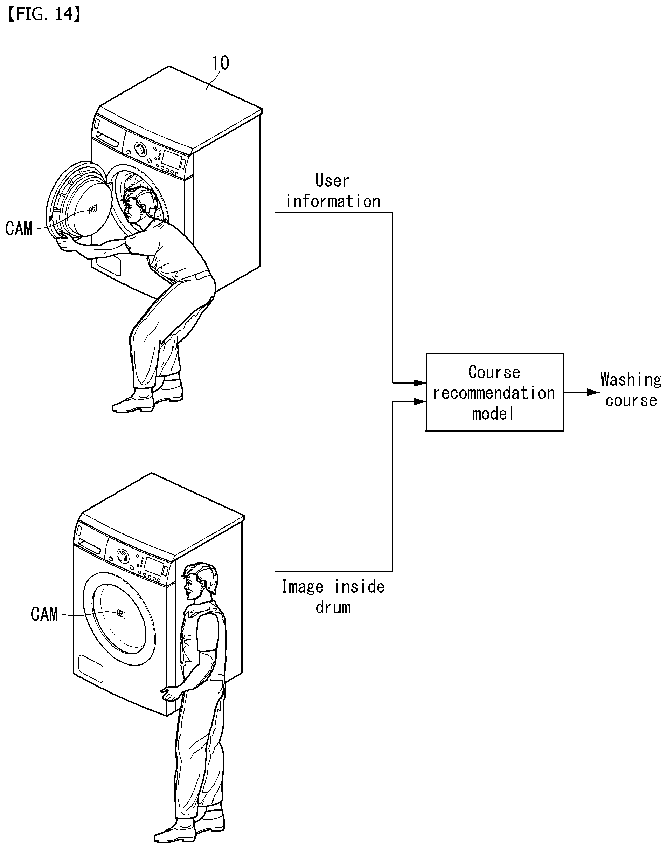

FIG. 14 illustrates an implementation example of a washing course prediction method of FIG. 13.

Referring to FIG. 14, as described above, the processor 710 may determine a washing course based on user information and an image inside the drum obtained through the camera CAM while the control operation is performed.

The processor 710 may generate the user information by identifying the user through the camera CAM of the door 418. The processor 710 may also identify a type of fabric inside the drum through the camera CAM of the door 418.

The processor 710 may determine the washing course using the user information and the type of fabric identified thus.

For example, the processor 710 may determine that the user is ID#02 based on the user's face recognition result. The processor 710 may identify a type of fabric positioned in the drum as wool at the moment the door 418 is closed.

In this instance, the processor 710 may apply ID#02 and wool as input data to a washing course recommendation model and may set a wool washing course frequently used by the user as a control operation based on an output value.

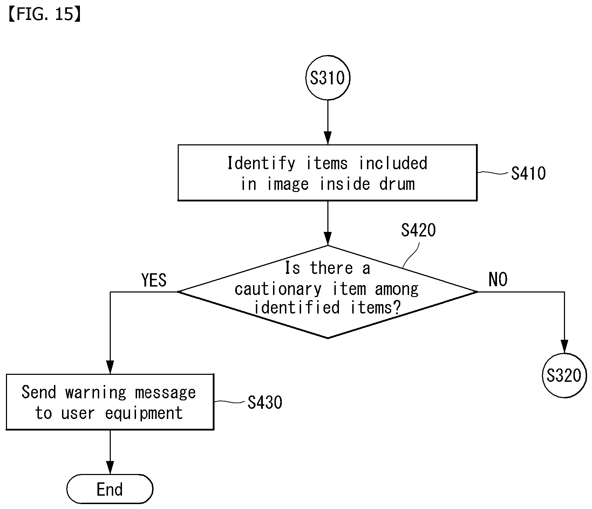

FIG. 15 is a flow chart illustrating a cautionary item detection method according to an embodiment of the present disclosure.

Referring to FIG. 15, the processor 710 may generate an image inside the drum and identify one or more items included in the generated image inside the drum, in S410.

The processor 710 may detect a cautionary item of the one or more items included in the image inside the drum, in S420.

The cautionary item refers to an item that is not suitable for the purpose of the washing machine. The cautionary item may include items vulnerable to water, such as valuables and electronic devices. For example, when the smartphone is put into the washing machine, the processor 710 may detect the smartphone.

In an embodiment of the present disclosure, the processor 710 may detect the cautionary item using a pre-learned artificial neural network-based classification model. The pre-learned classification model may be a pre-trained learning model using a plurality of training images and labeling data corresponding to the plurality of training images. In this instance, the labeling data may be cautionary item information. Further, the labeling data may be preset by the user.

If the cautionary item exists ('YES' in S420), the processor 710 may send a warning message to a user equipment 1500, in S430.

The warning message may include an image inside the drum and a text message notifying the existence of the cautionary item. In this instance, the image inside the drum may be an image in which only an area including the cautionary item is cropped. In an embodiment of the present disclosure, if the cautionary item exists, the processor 710 may control the control operation of the intelligent washing machine 10 to be stopped.

If the cautionary item does not exist ('NO' in S420), the processor 710 may analyze the image inside the drum to predict and/or determine a washing course.

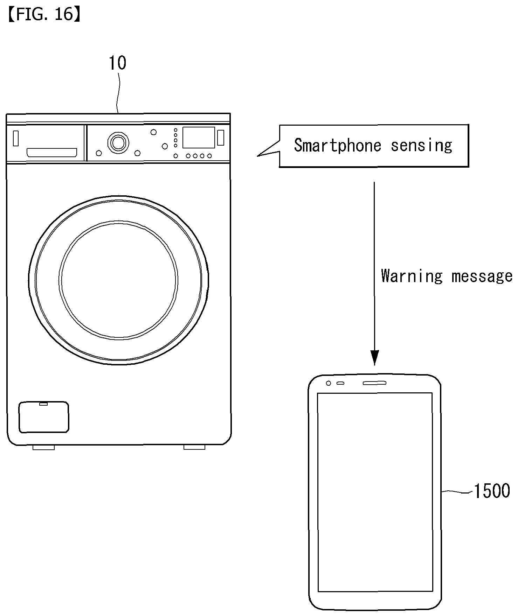

FIG. 16 illustrates an implementation example of a cautionary item detection method of FIG. 15.

Referring to FIG. 16, when a smartphone 1500 is detected in the drum of the intelligent washing machine 10, the processor 710 may send a message about the detection of the smartphone 1500 to the user equipment 1500.

For example, detection of a cautionary item may be performed by analyzing an image inside the drum obtained at the moment the door 418 of the intelligent washing machine 10 is closed. That is, by detecting the cautionary item before a washing stroke is performed, it is possible to prevent a damage of the user due to a damage of the cautionary item by guiding an occurrence of the damage to the cautionary item due to washing water before the occurrence of the damage.

As described above, the cautionary item refers to an item that is not suitable for the purpose of the washing machine. The cautionary item may include items vulnerable to water, such as valuables and electronic devices. For example, when the smartphone 1500 is put into the washing machine, the processor 710 may detect the smartphone 1500.

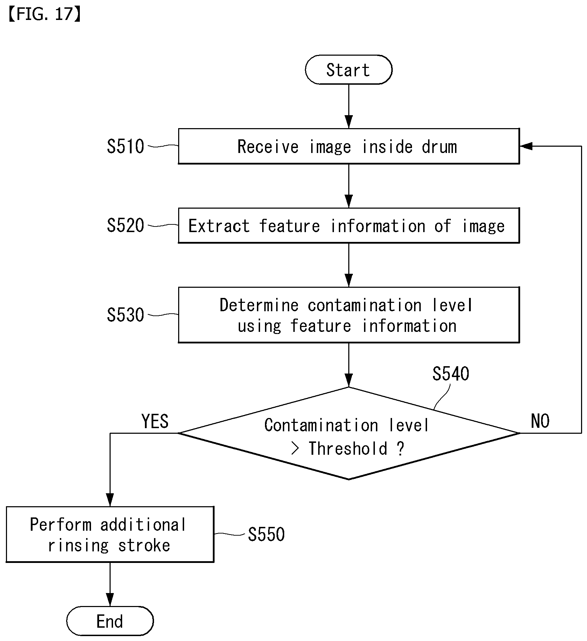

FIG. 17 is a flow chart illustrating a control method of a washing machine according to an embodiment of the present disclosure.

Referring to FIG. 17, the processor 710 may receive an image inside the drum, in S510.

The processor 710 may extract feature information from the image inside the drum and determine a contamination level using the extracted feature information, in S520 and S530.

The feature extraction of the image may be performed using a convolutional neural network (CNN) model. The processor 710 may apply the image inside the drum to the CNN model and infer feature information from an output value of the CNN model. The feature extracted from the input image may be in the form of a vector or a plurality of vectors.

When the contamination level exceeds a preset threshold ('YES' in S540), the processor 710 may control the intelligent washing machine 10 to perform an additional rinsing stroke, in S550.

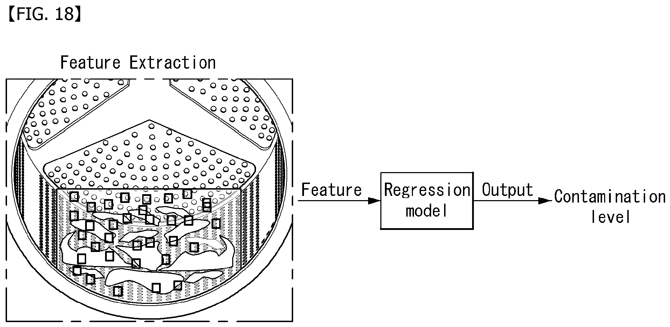

FIG. 18 illustrates an implementation example of a contamination level measurement method of FIG. 17.

Referring to FIG. 18, the processor 710 may obtain an image inside the drum through the camera CAM while performing a control operation of at least one of a washing stroke, a rinsing stroke, or a spin-drying stroke.

In an implementation, the processor 710 may obtain an image inside the drum while the washing stroke is being performed and apply the obtained image to a prediction model to predict a level of contamination inside the drum. As described above, by predicting the level of contamination while the washing stroke is performed, the processor 710 may modify the control operation of the washing machine so that an additional washing stroke is further performed or time of the rinsing stroke is increased.

In another implementation, the processor 710 may obtain an image inside the drum while the rinsing stroke is being performed and apply the obtained image to a prediction model to obtain an image inside the drum. As described above, by predicting a level of contamination while the rinsing stroke is performed, the processor 710 may modify the control operation of the washing machine so that an additional rinsing stroke is further performed.

In yet another implementation, the processor 710 may obtain an image inside the drum while the spin-drying stroke is being performed and apply the obtained image to a prediction model to obtain an image inside the drum. As described above, by predicting a level of contamination while the spin-drying stroke is performed, the processor 710 may modify the control operation of the washing machine so that an additional washing stroke is further performed.

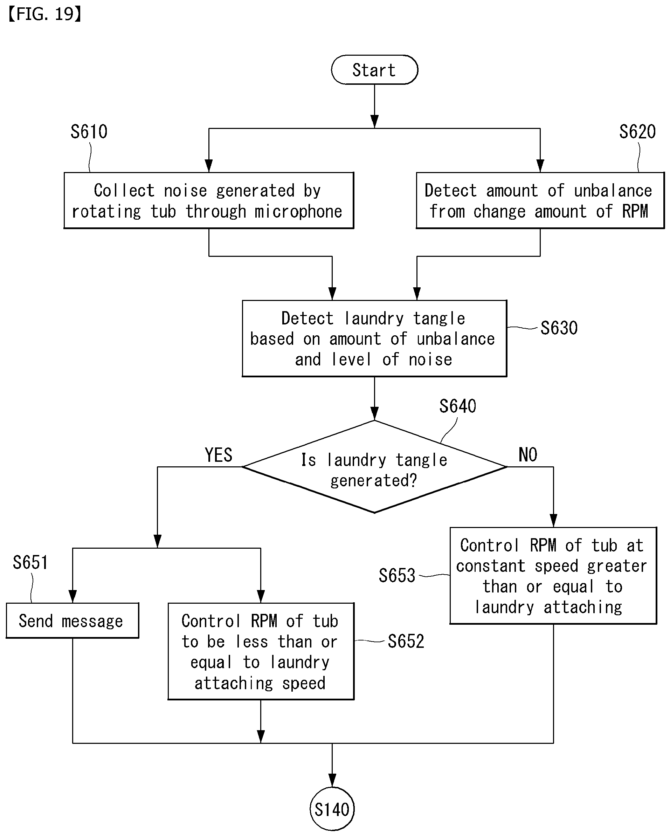

FIG. 19 is a flow chart illustrating a control method for laundry tangle according to an embodiment of the present disclosure.

When washing water used for washing after washing is discharged to the outside, a rinsing stroke is performed, and the processor 710 may spin the motor 773 at a high speed to spin-dry laundry attached to an inner wall of the drum 410 by a centrifugal force. In this instance, if the laundry is not evenly distributed in the drum, an unbalance occurs and the tub vibrates excessively.

On the contrary, if the laundry is evenly distributed in the drum and thus an amount of unbalance is small, a rotation of the drum 410 is even, and thus a noise level due to the vibration of the tub may be low.

For example, if the laundry is evenly distributed, the noise level may be less than or equal to 58 dB during the washing stroke and/or the rinsing stroke and may be less than or equal to 63 dB during the spin-drying stroke. For example, if the laundry is not evenly distributed, the noise level may be greater than or equal to 58 dB during the washing stroke and/or the rinsing stroke and may be greater than or equal to 63 dB during the spin-drying stroke.

A control method of the intelligent washing machine 10 according to an embodiment of the present disclosure in relation to the laundry tangle and the noise is described below.

Referring to FIG. 19, the processor 710 may collect a noise generated by rotating the tub through a microphone, in S610.

The processor 710 may detect an amount of unbalance from a change amount of rate per minute (RPM), in S620. The amount of unbalance may be predicted from the change amount of RPM, and the processor 710 in an embodiment of the present disclosure may predict the change amount of RPM using an UB prediction model. The UB prediction model may be trained with the change amount of RPM and labeling data corresponding to the change amount of RPM. The labeling data may be the amount of unbalance. Accordingly, the processor 710 may measure the change amount of RPM and detect the amount of unbalance from the measured change amount of RPM.

The processor 710 may detect laundry tangle based on the amount of unbalance and a level of noise, in S630.

If there is laundry tangle, a noise level of the tub may increase, and the amount of unbalance may increase since the laundry is not evenly distributed. On the contrary, if there is no laundry tangle, the noise level of the tub is within a normal range, and the amount of unbalance is normal since the laundry is evenly distributed.

Based on this point, the amount of unbalance and the level of noise are set as input data, and a laundry tangle detection model may be trained with labeling data corresponding to the input data. The processor 710 may identify the laundry tangle using the laundry tangle detection model.

If the laundry tangle is detected ('YES' in S640), the processor 710 may send a message about the laundry tangle to the user equipment 1500, in S651.

The message about the laundry tangle may include at least one of a text message indicating that the laundry tangle has occurred and an image inside the drum.

If the laundry tangle is detected ('YES' in S640), the processor 710 may control RPM of the tub to be less than or equal to a laundry attaching speed, in S652.

If the laundry tangle is not detected ('NO' in S640), the processor 710 may control RPM of the tub at a constant speed greater than or equal to the laundry attaching speed, in S653.

The control method of the intelligent washing machine 10 according to various embodiments of the present disclosure may reinforcement-learn a prediction model based on information of an additional control operation when the additional control operation is performed in the control operation of the washing machine. In this instance, the additional control operation may include at least one of an additional control operation depending on whether the laundry tangle occurs and an additional control operation depending on the contamination level inside the drum.

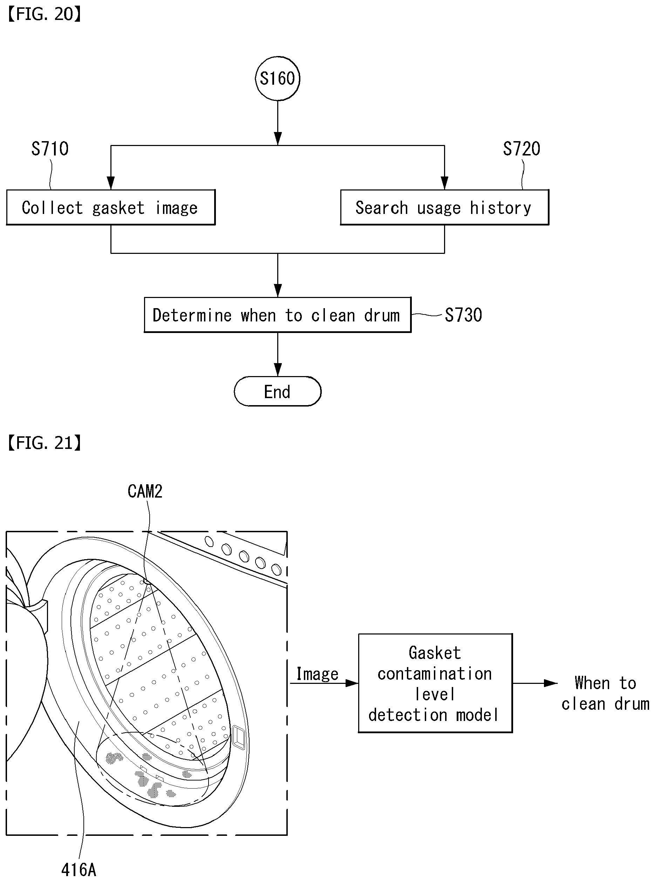

FIG. 20 is a flow chart illustrating a method of determining when to clean a drum according to an embodiment of the present disclosure.

Referring to FIG. 20, the processor 710 may perform an additional control operation depending on the predicted contamination level, and may collect a gasket image through a camera CAM when the control operation is finished, in S710.

In an embodiment of the present disclosure, the camera may be a gasket camera.

The processor 710 may search a usage history of the user, in S720.

In this instance, the usage history of the user may include at least one of user information, a type of fabric, a washing time, a washing frequency, the number of times cleaning the tub, a cleaning frequency of the tub, or additional user course setting information in a control operation.

The processor 710 may determine when to clean the drum 410 based on the gasket image and the usage history, in S730.

The processor 710 may determine when to clean the drum 410 using feature information extracted from the gasket image and the usage history. The processor 710 may apply the gasket image and the usage history to a pre-learned prediction model of when to clean the drum, and may determine when to clean the drum 410 from an output value that is a result of application.

In an embodiment of the present disclosure, if when to clean the drum 410 is determined, the processor 710 may transmit a guide message to the user equipment 1500.

FIG. 21 illustrates an implementation example of a method of determining when to wash a drum in FIG. 20.

Referring to FIG. 21, when a control operation of the intelligent washing machine 10 is finished or the opening of the door 418 is detected, the processor 710 may generate a gasket image.

The processor 710 may apply the gasket image to a contamination level detection model of the gasket 416A, extract feature information of the gasket image, and determine when to clean the drum 410 based on the extracted feature information.

For example, a weight value of the contamination level detection model of the gasket 416A may be calculated by the processor 710 so that when to clean the drum 410 is inferred to be close to the current time in proportion to a contamination level of the gasket 416A.

The present disclosure has been described based on a front-loading washing machine in which a washing tub is disposed horizontally, by way of example, but is not limited thereto. For example, the present disclosure can be applied to a top-loading washing machine in the same manner. For example, the top-loading washing machine may include at least one camera on the inside of a door and may perform the same AI processing. For example, the top-loading washing machine may include at least one camera on a circumferential surface of a laundry entrance and may perform AI processing that predicts when to clean a washing tub. That is, the top-loading washing machine can be controlled and/or managed based on various control methods described above with reference to FIGS. 6 to 21.

The present invention described above may be implemented using a computer-readable medium with programs recorded thereon for execution by a processor to perform various methods presented herein. The computer-readable medium includes all kinds of recording devices capable of storing data that is readable by a computer system. Examples of the computer-readable mediums include hard disk drive (HDD), solid state disk (SSD), silicon disk drive (SDD), ROM, RAM, CD-ROM, a magnetic tape, a floppy disk, an optical data storage device, the other types of storage mediums presented herein, and combinations thereof. If desired, the computer-readable medium may be realized in the form of a carrier wave (e.g., transmission over Internet). Thus, the foregoing description is merely an example and is not to be considered as limiting the present invention. The scope of the present invention should be determined by rational interpretation of the appended claims, and all changes within the equivalent range of the present invention are included in the scope of the present invention.

## Claims

1. A method of controlling an intelligent washing machine, the method comprising:
identifying a user from an image of the user;
predicting a first washing course corresponding to user information based on the identified user information;
performing a control operation based on the predicted first washing course;
collecting an image inside a drum through a camera while the control operation is being performed;
predicting a contamination level inside the drum based on the image inside the drum and a pre-learned prediction model; and
changing the first washing course to a second washing course based on the predicted contamination level.

2. The method of claim 1, wherein predicting the first washing course comprises:
applying the user information to a pre-learned artificial neural network-based course recommendation model; and
determining the washing course based on an output value of the course recommendation model.

3. The method of claim 1, wherein predicting the first washing course comprises:
collecting an image inside the drum through the camera in response to a closing of a door;
identifying a type of fabric based on the image inside the drum; and
applying the identified type of fabric and the user information to a pre-learned artificial neural network-based course recommendation model to determine the first washing course.

4. The method of claim 1, wherein identification information of the user is stored in a form of an ID.

5. The method of claim 1, wherein the first and second washing courses include at least one of a washing stroke, a rinsing stroke, or a spin-drying stroke, and
wherein a stroke included in the second washing course is compared to and different from a stroke of the first washing course in at least one of an operation sequence, an operation pattern, an operation time or RPM.

6. The method of claim 1, further comprising:
collecting a noise generated by rotating a tub through a microphone;
detecting an amount of unbalance from a change amount of rate per minute (RPM); and
detecting a laundry tangle based on the amount of unbalance and a level of the noise.

7. The method of claim 6, further comprising:
based on the laundry tangle being sensed, sending a message about the laundry tangle to a user equipment.

8. The method of claim 6, further comprising:
based on the laundry tangle being sensed, controlling the RPM of the tub to be less than or equal to a laundry attaching speed in the control operation.

9. The method of claim 6, further comprising:
based on the laundry tangle being sensed, controlling the RPM of the tub at a constant speed greater than or equal to a laundry attaching speed in the control operation.

10. The method of claim 1, further comprising:
based on the control operation being finished, collecting an image of a gasket;
searching a usage history of the user; and
determining when to clean the drum based on the image of the gasket and the usage history.

11. The method of claim 10, wherein the usage history includes at least one of the user information, a type of fabric, a washing time, a washing frequency, a number of times cleaning a tub, a cleaning frequency of the tub, or an additional user course setting in the control operation.

12. The method of claim 1, further comprising:
analyzing the image inside the drum and detecting a cautionary item that is not suitable for use of the washing machine among one or more items included in the image inside the drum; and
based on the cautionary item being detected, sending a warning message to a user equipment.

13. The method of claim 1, further comprising:
Reinforcement-learning the prediction model based on information of the changed washing course.

14. An intelligent washing machine comprising:
a communication module;
a memory;
a camera configured to capture an image including a user and an image inside a drum; and
a processor configured to:
identify the user from the image including the user;
predict a first washing course corresponding to user information based on the identified user information;
collect the image inside the drum through the camera while performing a control operation based on the predicted first washing course;
predict a contamination level inside the drum based on the image inside the drum and a pre-learned prediction model; and
change the first washing course to a second washing course based on the predicted contamination level.

15. The intelligent washing machine of claim 14, wherein identification information of the user is stored in a form of an ID.

16. The intelligent washing machine of claim 14, wherein the first and second washing courses include at least one of a washing stroke, a rinsing stroke, or a spin-drying stroke, and
wherein a stroke included in the second washing course is compared to and different from a stroke of the first washing course in at least one of an operation sequence, an operation pattern, an operation time or RPM.

17. The intelligent washing machine of claim 14, further comprising:
a microphone configured to collect a noise generated by rotating a tub,
wherein the processor is further configured to detect an amount of unbalance from a change amount of rate per minute (RPM) and detect a laundry tangle based on the amount of unbalance and a level of the noise.

18. The intelligent washing machine of claim 17, wherein the processor is further configured to, based on the laundry tangle being sensed, send a message about the laundry tangle to a user equipment through the communication module.

19. The intelligent washing machine of claim 17, wherein the processor is further configured to, based on the laundry tangle being sensed, control the RPM of the tub to be less than or equal to a laundry attaching speed in the control operation.

20. The intelligent washing machine of claim 17, wherein the processor is further configured to, based on the laundry tangle being sensed, control the RPM of the tub at a constant speed greater than or equal to a laundry attaching speed in the control operation.
